# EUROPEAN PATENT SPECIFICATION

(11) **EP 2 290 909 B1**
(45) Date of publication and mention of the grant of the patent: **12.04.2017**
(21) Application number: 10165390.5
(22) Date of filing: 09.06.2010
(51) Int. Cl.: H04L 29/08, H04W 52/02, H04B 1/036

(54) **Traffic control method and terminal**
Verkehrssteuerverfahren und Endgerät
Procédé de contrôle de trafic et terminal

(30) Priority: 11.08.2009 CN 200910163363
(43) Date of publication of application: 02.03.2011
(73) Proprietor: Huawei Device Co., Ltd., Longgang District Shenzhen Guangdong 518129 (CN)
(72) Inventor: Tao, Zhidong, 518129, Shenzhen Guangdong (CN); Jin, Linfang, 518129, Shenzhen Guangdong (CN); Gong, Shuqiang, 518129, Shenzhen Guangdong (CN); Zhou, Taotao, 518129, Shenzhen Guangdong (CN); Kong, Linghe, 518129, Shenzhen Guangdong (CN); Li, Hang, 518129, Shenzhen Guangdong (CN); Fang, Yi, 518129, Shenzhen (CN); Zhang, Qizhi, 518129, Shenzhen Guangdong (CN); He, Yongquan, 518129, Shenzhen Guangdong (CN)
(74) Representative: Epping - Hermann - Fischer

(56) References cited:
- EP-A2- 0 572 865
- EP-A2- 1 873 652
- US-A- 5 768 267
- US-A1- 2004 160 901
- US-A1- 2006 239 216

## Description

### FIELD OF THE TECHNOLOGY

The present invention relates to the field of communications technology, and more particularly to a traffic control method and terminal.

### BACKGROUND OF THE INVENTION

Along with the gradual maturity of the technology of electronic equipment and the increasingly fierce competition in the market of electronic equipment, data bandwidth for wireless terminal equipment such as a wireless network card, a mobile phone, a wireless gateway increases rapidly and functions of the wireless terminal equipment improve day by day. The wireless terminal equipment has a small volume and ensures great portability. Thus, the wireless terminal equipment itself does not have sufficient heat dissipation space or have heat dissipation equipment installed for heat dissipation, so that the temperature of a housing of the wireless terminal equipment rises, and thus the use life of the wireless terminal equipment might be shortened or even potential safety hazards might occur. With the development of the wireless communications technology, technologies such as the high speed packet access evolution (HSPA+), the long term evolution (LTE), and the worldwide interoperability for microwave access (WiMAX) have already been commercialized. The new technology greatly increases the data bandwidth and also makes the severe problem of heat dissipation for the wireless terminal equipment even more severe.

In order to prevent overheat of the wireless terminal equipment from affecting the use life of the wireless terminal equipment, in an existing method, power consumption of the wireless terminal equipment is controlled to reduce the heat generated by the wireless terminal equipment. A specific implementation method is to make the wireless terminal equipment enter into a sleep mode or break network connection of the wireless terminal equipment when the wireless terminal equipment reaches a certain temperature, so as to pause the work of the wireless terminal equipment. When the temperature of the wireless terminal equipment falls to a set temperature, the wireless terminal equipment resumes to a normal use status.

Document D1 (US 2004/160901 A1) discloses a method for controlling temperature-related transmissions in radio-communication system. A measuring device is used to determining the operating temperature, when the measured temperature exceeds a predetermined threshold temperature, the mobile station will reduce its transmission rate.

Document D2 (US 5768267A) discloses a method for registering a mobile station when the mobile station first enters a communication system which supports packet data channel. In the document, it discloses the widely usefulness of the open system interface (OSI) model or the TCP/IP protocol stack in the packet network.

Document D3 (EP 0572865 A2) relates to a protocol stack management system that avoids the need for physical copying of buffers.

Document D4 (EP 1873652 A2) relates to a method for reduce the feeding rate of data from the feed buffer to the interface when determining the temperature of the device has risen above a temperature threshold.

Document D5 (US 2006/239216 A1) relates to a method and apparatus for improved self-healing in a mobile ad-hoc wireless network, in which network communication functions are divided into a plurality of functional layers.

Although the power consumption of the wireless terminal equipment may be reduced to decrease heat generated by the wireless terminal equipment by using the existing method, the work might be paused when the wireless terminal equipment reaches the certain temperature in this method, so that normal use of the wireless terminal equipment by a user is influenced.

### SUMMARY OF THE INVENTION

The disclosure is directed to a traffic control method, device, and terminal, so as to wireless terminal equipment normally.

An embodiment of the disclosure provides a traffic control method, which includes the following.
monitoring a working temperature of equipment (101);
determining whether the working temperature reaches a control temperature (102); and
controlling a rate of data interaction between adjacent function layers if the working temperature reaches the control temperature (103), characterized in that the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
filling invalid data in a transmission bandwidth between the adjacent function layers to reduce a rate of valid data interaction between the adjacent function layers.

An embodiment of the disclosure further provides a traffic control method, which includes the following.
monitoring a working temperature of equipment (101);
determining whether the working temperature reaches a control temperature (102); and
controlling a rate of data interaction between adjacent function layers if the working temperature reaches the control temperature (103), characterized in that the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
converting a communication protocol for data interaction between the adjacent
function layers from a high rate version into a low rate version.

An embodiment of the disclosure further provides a traffic control method, which includes the following.
monitoring a working temperature of equipment (101);
determining whether the working temperature reaches a control temperature (102); and
controlling a rate of data interaction between adjacent function layers if the working temperature reaches the control temperature (103), characterized in that the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
adjusting a size of a buffer between the adjacent function layers; and/or
adjusting a scheduling period of scheduling data from the buffer between the adjacent function layers.

An embodiment of the disclosure further provides a terminal, which includes a traffic controlling device. The traffic controlling device includes:
a monitoring unit (401, 501), configured to monitor the working temperature of the terminal;
a determining unit (402, 502), configured to determine whether the working temperature monitored by the monitoring unit reaches a control temperature; and
a controlling unit (403, 503), configured to control a rate of data interaction between adjacent function layers when the determining unit determines that the working temperature reaches the control temperature, wherein the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
   filling invalid data in a transmission bandwidth between the adjacent function layers to reduce a rate of valid data interaction between the adjacent function layers.

An embodiment of the disclosure further provides a terminal, which includes a traffic controlling device. The traffic controlling device includes:
a monitoring unit (401, 501), configured to monitor the working temperature of the terminal;
a determining unit (402, 501), configured to determine whether the working temperature monitored by the monitoring unit reaches a control temperature; and
a controlling unit (403, 503), configured to control a rate of data interaction between adjacent function layers when the determining unit determines that the working temperature reaches the control temperature, wherein the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
   converting a communication protocol for data interaction between the adjacent function layers from a high rate version into a low rate version.

An embodiment of the disclosure further provides a terminal, which includes a traffic controlling device. The traffic controlling device includes:
a monitoring unit (401, 501), configured to monitor the working temperature of the terminal;
a determining unit (402, 502), configured to determine whether the working temperature monitored by the monitoring unit reaches a control temperature; and
a controlling unit (403, 503), configured to control a rate of data interaction between adjacent function layers, so as to reduce the rate of data interaction between the adjacent function layers, when the determining unit determines that the working temperature reaches the control temperature, wherein the adjacent function layers are two random adjacent function layers in the 7-layer Transmission Control Protocol/Internet Protocol model, wherein the controlling unit (403, 503) include at least one of a buffer adjusting unit (5031) and a period adjusting unit (5032),
the buffer adjusting unit (5031) is configured to adjust a size of a buffer between the adjacent function layers when the determining unit (502) determines that the working temperature reaches the control temperature,
the period adjusting unit (5032) is configured to adjust a scheduling period of scheduling data in the buffer between the adjacent function layers when the determining unit (503) determines that the working temperature reaches the control temperature.

As can be seen from the technical solutions, when the working temperature of the equipment reaches the control temperature, the rate of data interaction between the adjacent function layers is controlled, so as to reduce the rate of data interaction between the adjacent function layers. In this way, a data traffic between the adjacent function layers is reduced, a data traffic of communication of other function layers is also reduced, power consumption of a digital operational circuit within the equipment in which the adjacent function layers are located is further reduced, and thus power consumption of work of the equipment is reduced, so that a user can use the equipment normally.

### BRIEF DESCRIPTION OF THE DRAWINGS

To make the technical solution under the present invention clearer, the accompanying drawings for illustrating the embodiments of the present invention or the prior art are outlined below. Apparently, the accompanying drawings are for the exemplary purpose only, and those skilled in the art can derive other drawings from such accompanying drawings without any creative effort.
FIG. 1 is a flow chart of a traffic control method according to an embodiment of the present invention;
FIG. 2 is a flow chart of a traffic control method according to another embodiment of the present invention;
FIG. 3 is a data flow direction diagram of a traffic control method according to still another embodiment of the present invention;
FIG. 4 is a structural view of traffic control equipment according to an embodiment of the present invention; and
FIG. 5 is a structural view of traffic control equipment according to another embodiment of the present invention.

### DETAILED DESCRIPTION OF THE EMBODIMENTS

The following detailed description is directed to the technical solution of the present invention with reference to the accompanying drawings. However, the embodiments to be described are only some embodiments of the present invention. Those skilled in the art can derive other embodiments from the embodiments given herein without making any creative effort, and all such embodiments are covered in the protection scope of the present invention.

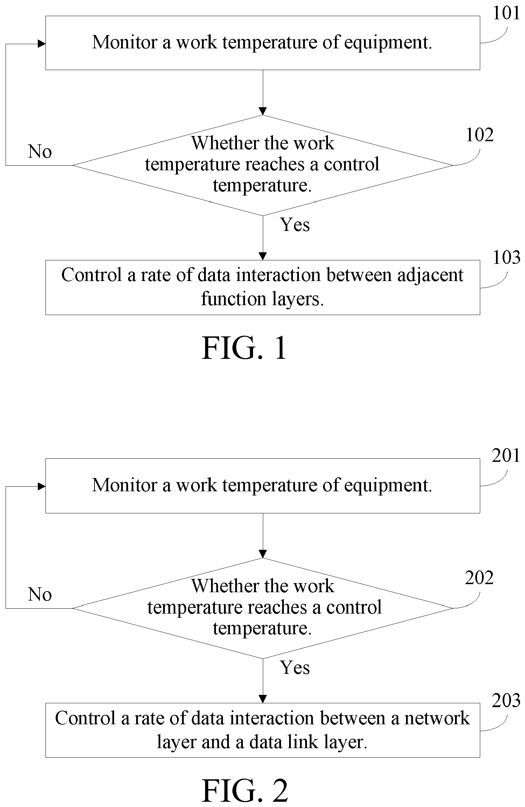

Traffic control methods provided in embodiments of the present invention are introduced first. FIG. 1 shows a process of a traffic control method according to an embodiment of the present invention, which includes the following:

In block 101, the working temperature of equipment is monitored.

Specifically, the working temperature of the equipment is monitored through a device capable of monitoring temperature, such as a temperature sensor. The monitoring process may be performed in real time or periodically. Alternatively, the working temperature of the equipment may also be calculated indirectly through measurement data. Specifically, the working temperature of the equipment may be calculated indirectly in combination with formula and/or experiment derivation. For example, in an embodiment of the present invention, energy consumption of the equipment may be calculated according to an energy consumption equation W=UxIxt. Next, the working temperature of the equipment is obtained according to a mapping relation between the energy consumption of the equipment and the working temperature of the equipment. W is the energy consumption of the equipment, U is a work voltage of the equipment, I is a work current of the equipment, and t is a work time of the equipment. At this time, the measurement data may include U, I, and t.

The equipment may be wireless terminal equipment, such as a mobile phone, a wireless data card, a wireless network card, and a wireless gateway. Of course, the equipment may also be other portable equipment or non-portable equipment, which is not limited in the embodiments of the present invention.

In block 102, it is determined whether the working temperature reaches a control temperature. If the working temperature reaches the control temperature, block 103 is executed. If the working temperature does not reach the control temperature, block 101 is executed, and the working temperature of the equipment continues to be monitored.

The control temperature can be preset in advance according to different equipment and different environment.

Reaching the control temperature may be greater than the control temperature or equal to the control temperature.

In block 103, the rate of data interaction between adjacent function layers is controlled.

The adjacent function layers may be two random adjacent function layers in the 7-layer Transmission Control Protocol/Internet Protocol (TCP/IP) model. The 7 layers are an application layer, a presentation layer, a session layer, a transport layer, a network layer, a data link layer, and a physical layer, respectively.

The controlling the rate of the data interaction between the adjacent function layers may be reducing the rate of data interaction between the adjacent function layers, so as to reduce a data traffic between the adjacent function layers. Specifically, the rate of data interaction between the adjacent function layers may be reduced in the following modes.
(1) The size of a buffer between the adjacent function layers is adjusted. For example, the size of the buffer between the adjacent function layers may be decreased, so that the buffer is in a constant full status and new data is unable to be written and the process turns to a buffer wait status, so as to reduce the rate of data interaction between the adjacent function layers. Alternatively, a scheduling period may also be adjusted. The scheduling period is a period of scheduling data in the buffer between the adjacent function layers. For example, the scheduling period may be increased, so that the data is buffered in the buffer for a longer time, so as to reduce the rate of data interaction between the adjacent function layers. Of course, the scheduling period may also be adjusted at the same time when the size of the buffer between the adjacent function layers is adjusted.
   The rate of data interaction between the adjacent function layers may be controlled through both the adjustment of the size of the buffer between the adjacent function layers and the adjustment of the scheduling period of scheduling data in the buffer between the adjacent function layers. In practical applications, in order to realize precise control of the rate of data interaction between the adjacent function layers, when the size of the buffer between the adjacent function layers is changed, the scheduling period of scheduling data in the buffer between the adjacent function layers may be increased or decreased. When the scheduling period of scheduling data in the buffer between the adjacent function layers is changed, the size of the buffer between the adjacent function layers may also be increased or decreased.
(2) Invalid data is filled in a transmission bandwidth between the adjacent function layers. For example, a null data packet which is checked to be incorrect may be filled in the transmission bandwidth, so as to make the invalid data be transmitted between the adjacent function layers only. As the transmission bandwidth between the adjacent function layers is constant, after the invalid data is filled in the transmission bandwidth, the bandwidth capable of transmitting valid data is reduced, so as to control the rate of valid data interaction between the adjacent function layers. Specifically, the rate of data interaction between the adjacent function layers may be controlled according to an amount of the filled invalid data.
(3) A communications protocol for data interaction between the adjacent function layers is converted from a high rate version into a low rate version. For example, when the universal serial bus (USB) protocol is adopted for data interaction between the adjacent function layers, if USB2.0 is applied during normal use, the USB2.0 may be converted into USB1.1, and if USB3.0 is applied during normal use, the USB3.0 may be converted into USB2.0 or USB1.1. For example, when the Bluetooth protocol is adopted for data interaction between the adjacent function layers, if Bluetooth2.0 is applied during normal use, the Bluetooth2.0 may be converted into Bluetoothl.2 or Bluetooth1.1.

It should be noted that the three realization modes are merely specific realization modes provided in the present invention, which do not limit the specific modes of controlling the rate of data interaction between the adjacent function layers. Any specific modes capable of controlling the rate of data interaction between the adjacent function layers will not influence realization of the embodiments of the present invention.

As can be seen from above, in this embodiment, when the working temperature of the equipment reaches the control temperature, the rate of data interaction between the adjacent function layers is controlled, so as to reduce the rate of data interaction between the adjacent function layers, so that the data traffic between the adjacent function layers is reduced and the data traffic of communication of other function layers is also reduced, thereby further reducing power consumption of a digital operational circuit within the equipment and reducing power consumption of work of the equipment, so as to decrease heat emitted during work of the equipment, control an integral temperature of the equipment, and ensure that a user can use the equipment normally.

At the same time, only the rate of data interaction between the adjacent function layers is controlled, so as to avoid the situation that the equipment drops offline or the communication has no traffic, so that the user can use the equipment normally without being influenced. All operations may be accomplished within the equipment in which the adjacent function layers are located and the existing communication protocols between the equipment do not need to be changed, and thus high adaptability is ensured. Furthermore, when the equipment is wireless terminal equipment, the reduction of data traffic of the communication may further reduce power consumption of a radio frequency (RF) circuit, and thus heat emitted during work of the equipment is further decreased and the integral temperature of the equipment is better controlled.

Furthermore, in an embodiment of the present invention, after the rate of data interaction between the adjacent function layers is controlled, the working temperature of the equipment is reduced. However, the control of the rate of data interaction between the adjacent function layers lowers performance of the equipment to a certain degree. Therefore, if it is monitored and found that the working temperature of the equipment is lower than a restore temperature, the control of the rate of data interaction between the adjacent function layers may be stopped, so that the rate of data interaction between the adjacent function layers resumes normal, so as to fully utilize resource of the equipment. The restore temperature may be preset in advance according to different equipment and different environment.

A traffic control method according to a second embodiment of the present invention is introduced in the following. In this embodiment, the adjacent function layers are a network layer and a data link layer. FIG. 2 describes a process of a traffic control method according to the second embodiment, which includes the following.

In block 201, a working temperature of equipment is monitored.

In block 202, it is determined whether the working temperature reaches a control temperature. If the working temperature reaches a control temperature, block 203 is executed. If the working temperature does not reach a control temperature, block 201 is executed and the working temperature of the equipment continues to be monitored.

Blocks 201 and 202 may be performed with reference to blocks 101 and 102.

In block 203, the rate of data interaction between the network layer and the data link layer is controlled. The network layer and the data link layer are two adjacent function layers in the 7-layer TCP/IP model.

Specifically, the rate of data interaction between the network layer and data link layer may be controlled in the following modes.
(1) The size of a buffer between the network layer and the data link layer is adjusted. For example, the size of the buffer between the network layer and the data link layer may be decreased, so that the buffer is in a constant full status and new data is unable to be written and the process turns to a buffer wait status. In this way, the rate of data interaction between the network layer and the data link layer is reduced. For example, when the USB is adopted between the network layer and the data link layer, the size of a USB memory buffer may be adjusted during data interaction.
   Alternatively, a scheduling period may also be adjusted. The scheduling period is a period of scheduling data in the buffer between the network layer and the data link layer. For example, the scheduling period may be increased, so that the data is buffered in the buffer for a longer time. In this way, the rate of data interaction between the network layer and the data link layer is reduced. Of course, the scheduling period may also be adjusted at the same time when the size of the buffer between the network layer and the data link layer is adjusted.
   The rate of data interaction between the network layer and the data link layer may be controlled through both the adjustment of the size of the buffer between the network layer and the data link layer and the adjustment of the scheduling period of scheduling data in the buffer between the network layer and the data link layer. In practical applications, in order to realize precise control of the rate of data interaction between the network layer and the data link layer, when the size of the buffer between the network layer and the data link layer is changed, the scheduling period of scheduling data in the buffer between the network layer and the data link layer may be increased or decreased. When the scheduling period of scheduling data in the buffer between the network layer and the data link layer is changed, the size of the buffer between the network layer and the data link layer may also be increased or decreased.
(2) Invalid data is filled in a transmission bandwidth between the network layer and the data link layer. For example, a null data packet with an incorrect checksum may be filled in the transmission bandwidth, so that the invalid data is only transmitted between the network layer and the data link layer. As the transmission bandwidth between the network layer and the data link layer is constant, after the invalid data is filled in the transmission bandwidth, the bandwidth capable of transmitting a valid data is reduced, so as to control a rate of valid data interaction between the network layer and the data link layer. Specifically, the rate of data interaction between the network layer and the data link layer may be controlled according to an amount of the filled invalid data.
(3) A communication protocol for data interaction between the network layer and the data link layer is converted from a high rate version into a low rate version. For example, when the USB protocol is adopted for data interaction between the network layer and the data link layer, if USB2.0 is applied during normal use, the USB2.0 may be converted into USB1.1, and if USB3.0 is applied during normal use, the USB3.0 may be converted into USB2.0 or USB1.1. For example, when the Bluetooth protocol is adopted for data interaction between the network layer and the data link layer, if Bluetooth2.0 is applied during normal use, the Bluetooth2.0 may be converted into Bluetooth1.2 or Bluetooth1.1.

It should be noted that the three realization modes are merely specific realization modes provided in the present invention, which do not limit the specific modes of controlling the rate of data interaction between the network layer and the data link layer. Any specific modes capable of controlling the rate of data interaction between the network layer and data link layer do not influence realization of the embodiments of the present invention.

As can be seen from above description, in this embodiment, when the working temperature of the equipment reaches the control temperature, the rate of data interaction between the network layer and the data link layer is controlled, so as to reduce the rate of data interaction between the network layer and the data link layer. In this way, the data traffic between the network layer and the data link layer is reduced, the data traffic of communication of other function layers is also reduced, power consumption of a digital operational circuit within the equipment is further reduced and power consumption of work of the equipment is reduced. As a result, heat emitted during work of the equipment is decreased, and thus the integral temperature of the equipment is controlled, so that a user can use the equipment normally.

At the same time, only the rate of data interaction between the network layer and the data link layer is controlled, so as to avoid the situation that the equipment drops offline or the communication has no traffic, so that the user can use the equipment normally without being influenced. All operations may be accomplished within the equipment in which the network layer and the data link layer are located and the existing communication protocols between the equipment do not need to be changed, and thus high adaptability is ensured. Furthermore, when the equipment is wireless terminal equipment, the reduction of data traffic of the communication may further reduce power consumption of an RF circuit, and thus heat emitted during work of the equipment is further decreased and the integral temperature of the equipment is better controlled.

Furthermore, in an embodiment of the present invention, after the rate of data interaction between the network layer and the data link layer is controlled, the working temperature of the equipment is reduced. However, the control of the rate of data interaction between the network layer and the data link layer lowers performance of the equipment to a certain degree. Therefore, if it is monitored and found that the working temperature of the equipment is lower than a restore temperature, the control of the rate of data interaction between the network layer and the data link layer may be stopped, so that the rate of data interaction between the network layer and the data link layer resumes normal, so as to fully utilize resource of the equipment. The restore temperature may be preset in advance according to different equipment and different environment.

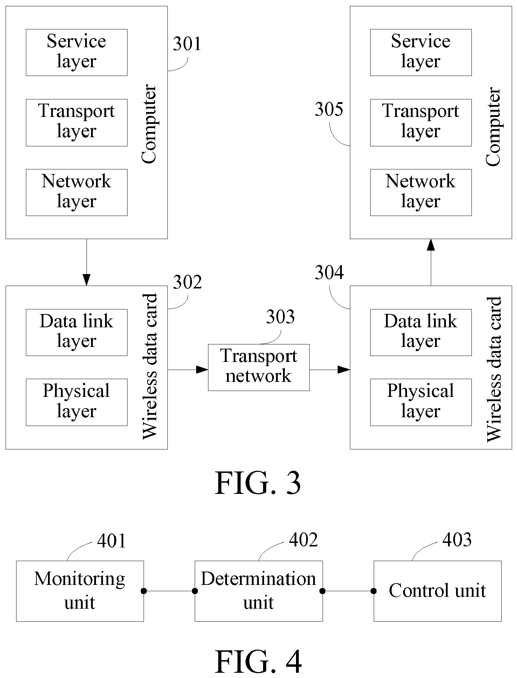

A traffic control method according to a third embodiment of the present invention is introduced in the following. FIG. 3 describes flow directions of a data in the traffic control method according to the third embodiment, as shown in FIG. 3.

A computer 301 sends a data through a wireless data card 302. After the data is transmitted by the transport network 303, the data is transferred to a computer 305 through a wireless data card 304.

As shown in FIG. 3, when the data card and computer is mapped to the 7 layer TCP/IP model, the computer works in the service layers (including an application layer, a presentation layer, and a session layer), a transport layer, and a network layer, so that the computer processes the data to the network layer only. The wireless data card works at the data link layer and the physical layer. When the data enters the wireless data card, the wireless data card transforms the data of the network layer into a data link layer data packet and sends the data packet through physical layer. The data of the network layer is transformed into a wireless protocol packet in a corresponding network. The corresponding networks includes, for example, a wideband code division multiple access (WCDMA) network, a time division-synchronous code division multiple access (TDSCDMA) network, a code division multiple access (CDMA) network or a global system for mobile communications (GSM) network.

Therefore, the upstream and downstream data traffic of the data card may be controlled by controlling the rate of data interaction between a network layer (computer) and a data link layer (a wireless data card). As the network layer and the data link layer may be connected through the USB which servers as a bridge for the data interaction, the rate of data interaction between the network layer and the data link layer may be controlled by controlling the data traffic of the USB.

When the wireless data card 302 monitors that the working temperature of the wireless data card 302 reaches the control temperature, the wireless data card 302 starts to control the rate of data interaction between the network layer of the computer 301 and the data link layer of the wireless data card 302. Specifically, the rate of data interaction between the network layer of the computer 301 and the data link layer of the wireless data card 302 may be controlled in the following modes.

In Mode 1, a size of a buffer of a memory of the wireless data card 302 is adjusted and a size of a USB memory buffer may be further adjusted.

Here the situation that the wireless data card 302 controls the rate of data interaction is described. In practical applications, the computer 301 may also control the rate of data interaction. At this time, the size of the buffer of the memory of the computer 301 may be adjusted and the size of the USB memory buffer may also be further adjusted.

In Mode 2, a size of a scheduling period is adjusted. Specifically, a period of scheduling data from the buffer of the memory of the wireless data card 302 may be adjusted. A period of scheduling data from the buffer of the memory of the computer 301 may be also adjusted. A period of scheduling data from the USB memory buffer may be adjusted. Specifically, the data in the USB memory buffer is transferred into a first-in-first-out (FIFO) buffer and the data in the FIFO buffer is then sent to the computer 301.

As the scheduling period becomes longer, the data traffic rate of the USB becomes lower, that is, the rate of data interaction between the network layer of the computer 301 and the data link layer of the wireless data card becomes lower.

In practical applications, Modes 1 and 2 may be adopted separately or together.

When the wireless data card 304 monitors that the working temperature of the wireless data card 304 reaches the control temperature, the wireless data card 304 starts to control the rate of data interaction between the network layer of the computer 305 and the data link layer of the wireless data card 304. Specifically, the rate of data interaction between the network layer of the computer 305 and the data link layer of the wireless data card 304 may be controlled in the following modes.

In Mode 1, a size of a buffer of a memory of the wireless data card 304 is adjusted and a size of a USB memory buffer may be further adjusted.

Here the situation that the wireless data card 304 controls the rate of data interaction is described. In practical applications, the computer 305 may also control the rate of data interaction. At this time, the size of the buffer of the memory of the computer 305 may be adjusted and the size of the USB memory buffer may also be further adjusted.

In Mode 2, a size of a scheduling period is adjusted. Specifically, a period of scheduling data from the buffer of the memory of the wireless data card 304 may be adjusted. A period of scheduling data from the buffer of the memory of the computer 305 may also be adjusted. A period of scheduling data from the USB memory buffer may also be adjusted. Specifically, the data in the USB memory buffer is transferred into a FIFO buffer and the data in the FIFO buffer is then sent to the computer 305. When the scheduling period becomes longer, the data traffic rate of the USB becomes lower, that is, the rate of data interaction between the network layer of the computer 305 and the data link layer of the wireless data card becomes lower.

In practical applications, Modes 1 and 2 may be adopted separately or together.

As can be seen from above description, in this embodiment, the rate of data interaction between the network layer and the data link layer is controlled by adjusting a data traffic rate of the USB, so as to reduce the rate of data interaction between the network layer and the data link layer. In this way, the data traffic of the wireless data card is also reduced, power consumption of a digital operational circuit and a RF circuit within the wireless data card is reduced, and power consumption of work of the wireless data card is reduced. As a result, heat emitted during work of the wireless data card work is decreased, and the integral temperature of the wireless data card is controlled, so that a user can use the wireless data card normally.

At the same time, because only the rate of data interaction between the network layer and the data link layer is controlled, the normal work of a wireless communication portion of the wireless data card is not influenced, so as to avoid the situation that the wireless data card drops offline or the communication has no traffic, so that the user can use the wireless data card normally without being influenced. Also, all operations may be accomplished within the wireless data card and the existing communication protocols between the computer and the wireless data card do not need to be changed, and thus high adaptability is ensured.

A traffic controlling device according to an embodiment of the present invention is further introduced. FIG. 4 describes a structure of a traffic controlling device according to a embodiment, which includes a monitoring unit 401, a determining unit 402, and a controlling unit 403.

The monitoring unit 401 is configured to monitor the working temperature of equipment.

The determining unit 402 is configured to determine whether the working temperature monitored by the monitoring unit 402 reaches a control temperature.

The controlling unit 403 is configured to control the rate of data interaction between the adjacent function layers when the determining unit 402 determines that the working temperature reaches the control temperature. The adjacent function layers are two random adjacent function layers in a 7-layer TCP/IP model.

Specifically, the controlling unit 403 may control the size of the buffer between the adjacent function layers and/or the scheduling period of scheduling data in the buffer between the adjacent function layers. Alternatively, the controlling unit 403 may fill invalid data in a transmission bandwidth between the adjacent function layers or the controlling unit 403 may convert communication protocols for data interaction between the adjacent function layers from a high rate version into a low rate version, so as to realize control of the rate of data interaction between the adjacent function layers.

As can be seen from above description, in this embodiment of the traffic controlling device, when the working temperature of the equipment reaches the control temperature, the rate of data interaction between the adjacent function layers is controlled, so as to reduce the rate of data interaction between the adjacent function layers. In this way, the data traffic between the adjacent function layers is reduced and the data traffic of communication of other function layers is also reduced, power consumption of a digital operational circuit within the equipment in which the adjacent function layers are located is reduced, and power consumption of work of the equipment is reduced. As a result, heat emitted during work of the equipment is decreased, and the integral temperature of the equipment is controlled, so that a user can use the equipment normally.

At the same time, only the rate of data interaction between the adjacent function layers is controlled, so as to avoid the situation that the equipment drops offline or the communication has no traffic, so that the user can use the equipment normally without being influenced. All operations may also be accomplished within the equipment and the existing communication protocols between the equipment do not need to be changed, and thus high adaptability is ensured. Furthermore, when the equipment is wireless terminal equipment, the reduction of data traffic of the communication may further reduce power consumption of an RF circuit, and thus heat emitted during work of the equipment is further decreased and the integral temperature of the equipment is better controlled.

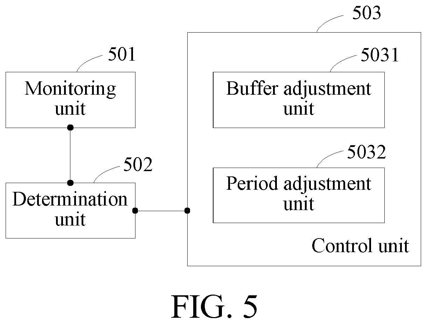

FIG. 5 describes a structure of a traffic controlling device according to a first embodiment, which includes a monitoring unit 501, a determining unit 502, and a controlling unit 503.

The monitoring unit 501 is configured to monitor the working temperature of the equipment.

The determining unit 502 is configured to determine whether the working temperature monitored by the monitoring unit 502 reaches a control temperature.

The controlling unit 503 is configured to control the rate of data interaction between the adjacent function layers when the determining unit 502 determines that the working temperature reaches the control temperature. The adjacent function layers are two random adjacent function layers in a 7-layer TCP/IP model.

As shown in FIG. 5, the controlling unit 503 may include at least one of a buffer adjusting unit 5031 and a period adjusting unit 5032.

The buffer adjusting unit 5031 is configured to adjust a size of a buffer between the adjacent function layers when the determining unit 502 determines that the working temperature reaches the control temperature.

The period adjusting unit 5032 is configured to adjust a scheduling period of scheduling data in the buffer between the adjacent function layers when the determining unit 503 determines that the working temperature reaches the control temperature.

As can be seen from above description, in this embodiment of the traffic controlling device, when the working temperature of the equipment reaches the control temperature, the rate of data interaction between the adjacent function layers is controlled, so as to reduce the rate of data interaction between the adjacent function layers. In this way, the data traffic between the adjacent function layers is reduced and the data traffic of communication of other function layers is also reduced, power consumption of a digital operational circuit within the equipment in which the adjacent function layers are located is reduced, and power consumption of work of the equipment is reduced. As a result, heat emitted during work of the equipment is decreased, and the integral temperature of the equipment is controlled, so that a user can use the equipment normally.

At the same time, only the rate of data interaction between the adjacent function layers is controlled, so as to avoid the situation that the equipment drops offline or the communication has no traffic, so that the user can user the equipment normally without being influenced. All operations may also be accomplished within the equipment and the existing communication protocols between the equipment do not need to be changed, and thus high adaptability is ensured. Furthermore, when the equipment is wireless terminal equipment, the reduction of the data traffic of the communication may further reduce power consumption of an RF circuit, and thus heat emitted during work of the equipment is further decreased and the integral temperature of the equipment is better controlled.

In an embodiment of the present invention, the determining unit included in the traffic controlling device in this embodiment may be further configured to determine whether the working temperature monitored by the monitoring unit is lower than a restore temperature. At this time, the controlling unit is further configured to stop controlling the rate of data interaction between the adjacent function layers when the determining unit determines that the working temperature is lower than the restore temperature, so that the rate of data interaction between the adjacent function layers resumes normal, so as to fully utilize resource of the equipment.

In an embodiment, the present invention further provides a terminal, which includes a traffic controlling device provided in the embodiment of the present invention. The terminal may be a computer, wireless terminal equipment, and the like. The wireless terminal equipment may be a mobile phone, a wireless data card, a wireless network card, a wireless gateway, and the like.

The terminal includes a traffic controlling device. The traffic controlling device includes a monitoring unit, a determining unit, and a controlling unit.

The monitoring unit is configured to monitor the working temperature of the terminal equipment.

The determining unit is configured to determine whether the temperature monitored by the monitoring unit reaches a control temperature.

The controlling unit is configured to control the rate of data interaction between the adjacent function layers when the determining unit determines that the working temperature reaches the control temperature. The adjacent function layers are two random adjacent function layers in the 7-layer TCP/IP model.

As can be seen from above description, for the traffic controlling device of the terminal in this embodiment, when the working temperature of the terminal equipment reaches the control temperature, the rate of data interaction between the adjacent function layers is controlled, so as to reduce the rate of data interaction between the adjacent function layers. In this way, the data traffic between the adjacent function layers is reduced and the data traffic of communication of other function layers is also reduced, power consumption of a digital operational circuit within the equipment in which the adjacent function layers are located is reduced, and power consumption of work of the equipment is reduced. As a result, heat emitted during work of the equipment is decreased, and the integral temperature of the equipment is controlled.

The adjacent function layer may be a network layer and a data link layer.

The determining unit is further configured to determine whether the working temperature monitored by the monitoring unit is lower than a restore temperature.

The controlling unit is further configured to stop controlling the rate of data interaction between the adjacent function layers when the determining unit determines that the working temperature is lower than the restore temperature.

The controlling unit includes a buffer adjusting unit, which is configured to adjust a size of a buffer between the adjacent function layers when the determining unit determines that the working temperature reaches the control temperature.

The controlling unit includes a period adjusting unit, which is configured to adjust a scheduling period of scheduling data in the buffer between the adjacent function layers when the determining unit determines that the working temperature reaches the control temperature.

When the terminal is a computer, the controlling the rate of data interaction between the adjacent function layers is controlling the rate of data interaction between a service layer and a transport layer or between a transport layer and a network layer.

When the terminal is a wireless data card, the controlling the rate of data interaction between the adjacent function layers is controlling the rate of data interaction between the data link layer and the physical layer.

When the terminal is a computer having a wireless data card, the controlling the rate of data interaction between the adjacent function layers is not only controlling the rate of data interaction between the service layer and the transport layer or between the transport layer and the network layer, but also controlling the rate of data interaction between the data link layer and the physical layer and the rate of data interaction between the network layer and the data link layer. The traffic controlling device may be disposed in the computer or may also be disposed in a wireless data card and of course may also be disposed in both the computer and the wireless data card. The embodiments of the present invention are not limited thereto.

It should be noted that the terminal in the embodiments of the present invention may be understood as a computer or a wireless data card or a computer having a wireless data card. The computer may also be understood as a net-book and the embodiments of the present invention are not limited thereto.

Those skilled in the art may understand that all or part of the blocks of the method according to the embodiments of the present invention may be implemented by a program instructing relevant hardware. The program may be stored in a computer readable storage medium. When the program runs, the blocks of the method according to the embodiments of the present invention are performed. The storage medium may be a magnetic disk, a Compact Disk Read-Only Memory (CD-ROM), a Read-Only Memory (ROM), or a Random Access Memory (RAM).

The traffic control method, the traffic controlling device, and the terminal provided in the embodiments of the present invention are introduced in detail. The description of the embodiments above is merely used to facilitate understanding of the methods and ideas of the present invention. Those skilled in the art can make variations and modifications to the present invention in terms of the specific implementations and application scopes according to the ideas of the present invention. Therefore, the specification shall not be construed as limitations to the present invention.

## Claims

1. A traffic control method, comprises:
monitoring a working temperature of equipment (101);
determining whether the working temperature reaches a control temperature (102); and
controlling a rate of data interaction between adjacent function layers if the working temperature reaches the control temperature (103), **characterized in that** the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
filling invalid data in a transmission bandwidth between the adjacent function layers to reduce a rate of valid data interaction between the adjacent function layers.

2. A traffic control method, comprises:
monitoring a working temperature of equipment (101);
determining whether the working temperature reaches a control temperature (102); and
controlling a rate of data interaction between adjacent function layers if the working temperature reaches the control temperature (103), **characterized in that** the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
converting a communication protocol for data interaction between the adjacent function layers from a high rate version into a low rate version.

3. A traffic control method, comprises:
monitoring a working temperature of equipment (101);
determining whether the working temperature reaches a control temperature (102); and
controlling a rate of data interaction between adjacent function layers if the working temperature reaches the control temperature (103), **characterized in that** the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
adjusting a size of a buffer between the adjacent function layers; and/or
adjusting a scheduling period of scheduling data from the buffer between the adjacent function layers.

4. The traffic control method according to claim 3, **characterized in that**, the adjacent function layers are a network layer and a data link layer, and data interaction between the network layer and the data link layer is carried out through a universal serial bus, and the adjusting the scheduling period of scheduling data in the buffer between the adjacent function layers comprises:
adjusting the scheduling period of scheduling data from a universal serial bus memory buffer.

5. The traffic control method according to any one of the claims 1 to 4, **characterized in that**, the controlling the rate of data interaction between the adjacent function layers comprises:
controlling the rate of data interaction between a network layer and a data link layer.

6. The traffic control method according to any one of the claims 1 to 5, **characterized in that**, if the working temperature of the equipment is lower than a restore temperature, after the controlling the rate of data interaction between the adjacent function layers, the method further comprises:
stopping controlling the rate of data interaction between the adjacent function layers.

7. A terminal, comprising a traffic controlling device, **characterized in that**, the traffic controlling device comprises:
a monitoring unit (401, 501), configured to monitor the working temperature of the terminal;
a determining unit (402, 502), configured to determine whether the working temperature monitored by the monitoring unit reaches a control temperature; and
a controlling unit (403, 503), configured to control a rate of data interaction between adjacent function layers when the determining unit determines that the working temperature reaches the control temperature, wherein the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
filling invalid data in a transmission bandwidth between the adjacent function layers to reduce a rate of valid data interaction between the adjacent function layers.

8. A terminal, comprising a traffic controlling device, **characterized in that**, the traffic controlling device comprises:
a monitoring unit (401, 501), configured to monitor the working temperature of the terminal;
a determining unit (402, 501), configured to determine whether the working temperature monitored by the monitoring unit reaches a control temperature; and
a controlling unit (403, 503), configured to control a rate of data interaction between adjacent function layers when the determining unit determines that the working temperature reaches the control temperature, wherein the adjacent function layers are two random adjacent function layers in the 7-layer Transmission Control Protocol/Internet Protocol model, wherein the rate of data interaction between the adjacent function layers is controlled, so as to reduce the rate of data interaction between the adjacent function layers, further comprises:
converting a communication protocol for data interaction between the adjacent function layers from a high rate version into a low rate version.

9. A terminal, comprising a traffic controlling device, **characterized in that**, the traffic controlling device comprises:
a monitoring unit (401, 501), configured to monitor the working temperature of the terminal;
a determining unit (402, 502), configured to determine whether the working temperature monitored by the monitoring unit reaches a control temperature; and
a controlling unit (403, 503), configured to control a rate of data interaction between adjacent function layers, so as to reduce the rate of data interaction between the adjacent function layers, when the determining unit determines that the working temperature reaches the control temperature, wherein the adjacent function layers are two random adjacent function layers in the 7-layer Transmission Control Protocol/Internet Protocol model, wherein the controlling unit (403, 503) include at least one of a buffer adjusting unit (5031) and a period adjusting unit (5032),
the buffer adjusting unit (5031) is configured to adjust a size of a buffer between the adjacent function layers when the determining unit (502) determines that the working temperature reaches the control temperature,
the period adjusting unit (5032) is configured to adjust a scheduling period of scheduling data in the buffer between the adjacent function layers when the determining unit (503) determines that the working temperature reaches the control temperature.

10. The terminal according to any one of the claims 7-9, **characterized in that**,
the determining unit (402, 502) is further configured to determine whether the working temperature monitored by the monitoring unit is lower than a restore temperature, and
the controlling unit (403, 503) is further configured to stop controlling the rate of data interaction between the adjacent function layers when the determining unit determines that the working temperature is lower than the restore temperature.

11. The terminal according to any one of claims 7-10, **characterized in that**, the terminal is a wireless data card, a computer, or a computer having a wireless data card.

12. The terminal according to any one of claims 7-10, **characterized in that**, the adjacent function layers are a network layer and a data link layer.

13. A computer program product, **characterized by** comprising computer program code, which, when executed by a computer unit, will cause the computer unit to perform all the steps of any one of claims 1 to 6.

## Patentansprüche

1. Verkehrssteuerverfahren, umfassend:
Überwachen einer Arbeitstemperatur einer Einrichtung (101);
Bestimmen, ob die Arbeitstemperatur eine Kontrolltemperatur erreicht (102); und
Steuern einer Rate von Dateninteraktion zwischen benachbarten Funktionsschichten, wenn die Arbeitstemperatur die Kontrolltemperatur erreicht (103), **dadurch gekennzeichnet, dass** die benachbarten Funktionsschichten zwei beliebige benachbarte Funktionsschichten im 7-schichtigen Übertragungssteuerungsprotokoll-/Internetprotokoll-Modell sind, wobei die Rate von Dateninteraktion zwischen den benachbarten Funktionsschichten so gesteuert wird, dass die Rate von Dateninteraktion zwischen den benachbarten Funktionsschichten reduziert wird, ferner umfassend:
Füllen von ungültigen Daten in eine Übertragungsbandbreite zwischen den benachbarten Funktionsschichten, um eine Rate von Interaktion gültiger Daten zwischen den benachbarten Funktionsschichten zu reduzieren.

2. Verkehrssteuerverfahren, umfassend:
Überwachen einer Arbeitstemperatur einer Einrichtung (101);
Bestimmen, ob die Arbeitstemperatur eine Kontrolltemperatur erreicht (102); und
Steuern einer Rate von Dateninteraktion zwischen benachbarten Funktionsschichten, wenn die Arbeitstemperatur die Kontrolltemperatur erreicht (103), **dadurch gekennzeichnet, dass** die benachbarten Funktionsschichten zwei beliebige benachbarte Funktionsschichten im 7-schichtigen Übertragungssteuerungsprotokoll-/Internetprotokoll-Modell sind, wobei die Rate von Dateninteraktion zwischen den benachbarten Funktionsschichten so gesteuert wird, dass die Rate von Dateninteraktion zwischen den benachbarten Funktionsschichten reduziert wird, ferner umfassend:
Umwandeln eines Kommunikationsprotokolls für Dateninteraktion zwischen den benachbarten Funktionsschichten von einer hochratigen Version in eine niedrigratige Version.

3. Verkehrssteuerverfahren, umfassend:
Überwachen einer Arbeitstemperatur einer Einrichtung (101);
Bestimmen, ob die Arbeitstemperatur eine Kontrolltemperatur erreicht (102); und
Steuern einer Rate von Dateninteraktion zwischen benachbarten Funktionsschichten, wenn die Arbeitstemperatur die Kontrolltemperatur erreicht (103), **dadurch gekennzeichnet, dass** die benachbarten Funktionsschichten zwei beliebige benachbarte Funktionsschichten im 7-schichtigen Übertragungssteuerungsprotokoll-/Internetprotokoll-Modell sind, wobei die Rate von Dateninteraktion zwischen den benachbarten Funktionsschichten so gesteuert wird, dass die Rate von Dateninteraktion zwischen den benachbarten Funktionsschichten reduziert wird, ferner umfassend:
Anpassen einer Größe eines Puffers wischen den benachbarten Funktionsschichten; und/oder
Anpassen einer Dispositionsperiode zum Disponieren von Daten aus dem Puffer zwischen den benachbarten Funktionsschichten.

4. Verkehrssteuerverfahren nach Anspruch 3, **dadurch gekennzeichnet, dass** es sich bei den benachbarten Funktionsschichten um eine Netzschicht und eine Datensicherungsschicht handelt, und die Dateninteraktion zwischen der Netzschicht und der Datensicherungsschicht durch einen universellen seriellen Bus (USB) ausgeführt wird, und das Anpassen der Dispositionsperiode zum Disponieren von Daten im Puffer zwischen den benachbarten Funktionsschichten umfasst:
Anpassen der Dispositionsperiode zum Disponieren von Daten aus einem USB(universeller serieller Bus)-Speicherpuffer.

5. Verkehrssteuerverfahren nach einem der Ansprüche 1 bis 4, **dadurch gekennzeichnet, dass** das Steuern der Rate von Dateninteraktion zwischen den benachbarten Funktionsschichten umfasst:
Steuern der Rate von Dateninteraktion zwischen einer Netzschicht und einer Datensicherungsschicht.

6. Verkehrssteuerverfahren nach einem der Ansprüche 1 bis 5, **dadurch gekennzeichnet, dass**, wenn die Arbeitstemperatur der Einrichtung nach dem Steuern der Rate von Dateninteraktion zwischen den benachbarten Funktionsschichten niedriger als eine Wiederherstellungstemperatur ist, das Verfahren ferner umfasst:
Stoppen des Steuerns der Rate von Dateninteraktion zwischen den benachbarten Funktionsschichten.

7. Endgerät, das eine Verkehrssteuervorrichtung umfasst, **dadurch gekennzeichnet, dass** die Verkehrssteuervorrichtung umfasst:
eine Überwachungseinheit (401, 501), die so konfiguriert ist, dass sie die Arbeitstemperatur des Endgeräts überwacht;
eine Bestimmungseinheit (402, 502), die so konfiguriert ist, dass sie bestimmt, ob die von der Überwachungseinheit überwachte Arbeitstemperatur eine Kontrolltemperatur erreicht; und
eine Steuereinheit (403, 503), die so konfiguriert ist, dass sie eine Rate von Dateninteraktion zwischen benachbarten Funktionsschichten steuert, wenn die Bestimmungseinheit bestimmt, dass die Arbeitstemperatur die Kontrolltemperatur erreicht, wobei die benachbarten Funktionsschichten zwei beliebige benachbarte Funktionsschichten im 7-schichtigen Übertragungssteuerungsprotokoll-/Internetprotokoll-Modell sind, wobei die Rate von Dateninteraktion zwischen den benachbarten Funktionsschichten so gesteuert wird, dass die Rate von Dateninteraktion zwischen den benachbarten Funktionsschichten reduziert wird, ferner umfassend:
Füllen von ungültigen Daten in eine Übertragungsbandbreite zwischen den benachbarten Funktionsschichten, um eine Rate von Interaktion gültiger Daten zwischen den benachbarten Funktionsschichten zu reduzieren.

8. Endgerät, das eine Verkehrssteuervorrichtung umfasst, **dadurch gekennzeichnet, dass** die Verkehrssteuervorrichtung umfasst:
eine Überwachungseinheit (401, 501), die so konfiguriert ist, dass sie die Arbeitstemperatur des Endgeräts überwacht;
eine Bestimmungseinheit (402, 501), die so konfiguriert ist, dass sie bestimmt, ob die von der Überwachungseinheit überwachte Arbeitstemperatur eine Kontrolltemperatur erreicht; und
eine Steuereinheit (403, 503), die so konfiguriert ist, dass sie eine Rate von Dateninteraktion zwischen benachbarten Funktionsschichten steuert, wenn die Bestimmungseinheit bestimmt, dass die Arbeitstemperatur die Kontrolltemperatur erreicht, wobei die benachbarten Funktionsschichten zwei beliebige benachbarte Funktionsschichten im 7-schichtigen Übertragungssteuerungsprotokoll-/Internetprotokoll-Modell sind, wobei die Rate von Dateninteraktion zwischen den benachbarten Funktionsschichten so gesteuert wird, dass die Rate von Dateninteraktion zwischen den benachbarten Funktionsschichten reduziert wird, ferner umfassend:
Umwandeln eines Kommunikationsprotokolls für Dateninteraktion zwischen den benachbarten Funktionsschichten von einer hochratigen Version in eine niedrigratige Version.

9. Endgerät, das eine Verkehrssteuervorrichtung umfasst, **dadurch gekennzeichnet, dass** die Verkehrssteuervorrichtung umfasst:
eine Überwachungseinheit (401, 501), die so konfiguriert ist, dass sie die Arbeitstemperatur des Endgeräts überwacht;
eine Bestimmungseinheit (402, 502), die so konfiguriert ist, dass sie bestimmt, ob die von der Überwachungseinheit überwachte Arbeitstemperatur eine Kontrolltemperatur erreicht; und
eine Steuereinheit (403, 503), die so konfiguriert ist, dass sie eine Rate von Dateninteraktion zwischen benachbarten Funktionsschichten so steuert, dass die Rate von Dateninteraktion zwischen den benachbarten Funktionsschichten reduziert wird, wenn die Bestimmungseinheit bestimmt, dass die Arbeitstemperatur die Kontrolltemperatur erreicht, wobei die benachbarten Funktionsschichten zwei beliebige benachbarte Funktionsschichten im 7-schichtigen Übertragungssteuerungsprotokoll-/Internetprotokoll-Modell sind, wobei die Steuereinheit (403, 503) mindestens eine von einer Pufferanpassungseinheit (5031) und einer Periodenanpassungseinheit (5032) umfasst,
die Pufferanpassungseinheit (5031) so konfiguriert ist, dass sie eine Größe eines Puffers zwischen den benachbarten Funktionsschichten anpasst, wenn die Bestimmungseinheit (502) bestimmt, dass die Arbeitstemperatur die Kontrolltemperatur erreicht,
die Periodenanpassungseinheit (5032) so konfiguriert ist, dass sie eine Dispositionsperiode zum Disponieren von Daten im Puffer zwischen den benachbarten Funktionsschichten anpasst, wenn die Bestimmungseinheit (503) bestimmt, dass die Arbeitstemperatur die Kontrolltemperatur erreicht.

10. Endgerät nach einem der Ansprüche 7 bis 9, **dadurch gekennzeichnet, dass**:
die Bestimmungseinheit (402, 502) ferner so konfiguriert ist, dass sie bestimmt, ob die von der Überwachungseinheit überwachte Arbeitstemperatur niedriger als eine Wiederherstellungstemperatur ist; und
die Steuereinheit (403, 503) ferner so konfiguriert ist, dass sie das Steuern der Rate von Dateninteraktion zwischen den benachbarten Funktionsschichten stoppt, wenn die Bestimmungseinheit bestimmt, dass die Arbeitstemperatur niedriger als die Wiederherstellungstemperatur ist.

11. Endgerät nach einem der Ansprüche 7 bis 10, **dadurch gekennzeichnet, dass** das Endgerät eine drahtlose Datenkarte, ein Computer oder ein Computer mit einer drahtlosen Datenkarte ist.

12. Endgerät nach einem der Ansprüche 7 bis 10, **dadurch gekennzeichnet, dass** es sich bei den benachbarten Funktionsschichten um eine Netzschicht und eine Datensicherungsschicht handelt.

13. Computerprogrammprodukt, **dadurch gekennzeichnet, dass** es Computerprogrammcode umfasst, der bei Ausführung durch eine Computereinheit die Computereinheit veranlasst, alle Schritte nach einem der Ansprüche 1 bis 6 auszuführen.

## Revendications

1. Procédé de contrôle de trafic, comprenant les étapes suivantes :
surveiller une température de fonctionnement de l'équipement (101) ;
déterminer si la température de fonctionnement atteint une température de contrôle (102) ; et
contrôler un débit d'interaction de données entre des couches fonctionnelles adjacentes si la température de fonctionnement atteint la température de contrôle (103), **caractérisé en ce que** les couches fonctionnelles adjacentes sont deux couches fonctionnelles adjacentes aléatoires du modèle de protocole de contrôle de transmission/protocole Internet à 7 couches, où le débit d'interaction de données entre les couches fonctionnelles adjacentes est contrôlé, de manière à réduire le débit d'interaction de données entre les couches fonctionnelles adjacentes, le contrôle comprenant en outre l'étape suivante :
remplir des données non valides dans une bande passante de transmission entre les couches fonctionnelles adjacentes pour réduire un débit d'interaction de données valides entre les couches fonctionnelles adjacentes.

2. Procédé de contrôle de trafic, comprenant les étapes suivantes :
surveiller une température de fonctionnement de l'équipement (101) ;
déterminer si la température de fonctionnement atteint une température de contrôle (102) ; et
contrôler un débit d'interaction de données entre des couches fonctionnelles adjacentes si la température de fonctionnement atteint la température de contrôle (103), **caractérisé en ce que** les couches fonctionnelles adjacentes sont deux couches fonctionnelles adjacentes aléatoires du modèle de protocole de contrôle de transmission/protocole Internet à 7 couches, où le débit d'interaction de données entre les couches fonctionnelles adjacentes est contrôlé, de manière à réduire le débit d'interaction de données entre les couches fonctionnelles adjacentes, le contrôle comprenant en outre l'étape suivante :
convertir un protocole de communication pour une interaction de données entre les couches fonctionnelles adjacentes d'une version haut débit à une version bas débit.

3. Procédé de contrôle de trafic, comprenant les étapes suivantes :
surveiller une température de fonctionnement de l'équipement (101) ;
déterminer si la température de fonctionnement atteint une température de contrôle (102) ; et
contrôler un débit d'interaction de données entre des couches fonctionnelles adjacentes si la température de fonctionnement atteint la température de contrôle (103), **caractérisé en ce que** les couches fonctionnelles adjacentes sont deux couches fonctionnelles adjacentes aléatoires du modèle de protocole de contrôle de transmission/protocole Internet à 7 couches, où le débit d'interaction de données entre les couches fonctionnelles adjacentes est contrôlé, de manière à réduire le débit d'interaction de données entre les couches fonctionnelles adjacentes, le contrôle comprenant en outre les étapes suivantes :
ajuster la taille d'un tampon entre les couches fonctionnelles adjacentes ; et/ou ajuster une période de planification de données de planification provenant du tampon entre les couches fonctionnelles adjacentes.

4. Procédé de contrôle de trafic selon la revendication 3, **caractérisé en ce que** les couches fonctionnelles adjacentes sont une couche réseau et une couche de liaison de données, et une interaction de données entre la couche réseau et la couche de liaison de données est effectuée par l'intermédiaire d'un bus série universel, et l'ajustement de la période de planification des données de planification dans le tampon entre les couches fonctionnelles adjacentes comprend l'étape suivante :
ajuster la période de planification des données de planification provenant d'une mémoire tampon de bus série universel.

5. Procédé de contrôle de trafic selon l'une quelconque des revendications 1 à 4, **caractérisé en ce que** le contrôle du débit d'interaction des données entre les couches fonctionnelles adjacentes comprend l'étape suivante :
contrôler le débit d'interaction de données entre une couche réseau et une couche de liaison de données.

6. Procédé de contrôle de trafic selon l'une quelconque des revendications 1 à 5, **caractérisé en ce que**, si la température de fonctionnement de l'équipement est inférieure à une température de restauration, après le contrôle du débit d'interaction des données entre les couches fonctionnelles adjacentes, le procédé comprend en outre l'étape suivante :
arrêter le contrôle du débit d'interaction des données entre les couches fonctionnelles adjacentes.

7. Terminal, comprenant un dispositif de contrôle de trafic, **caractérisé en ce que** le dispositif de contrôle de trafic comprend :
une unité de surveillance (401, 501), configurée pour surveiller la température de fonctionnement du terminal ;
une unité de détermination (402, 502), configurée pour déterminer si la température de fonctionnement surveillée par l'unité de surveillance atteint une température de contrôle ; et
une unité de contrôle (403, 503), configurée pour contrôler un débit d'interaction de données entre des couches fonctionnelles adjacentes lorsque l'unité de détermination détermine que la température de fonctionnement atteint la température de contrôle, où les couches fonctionnelles adjacentes sont deux couches fonctionnelles adjacentes aléatoires du modèle de protocole de contrôle de transmission/protocole Internet à 7 couches, où le débit d'interaction de données entre les couches fonctionnelles adjacentes est contrôlé, de manière à réduire le débit d'interaction de données entre les couches fonctionnelles adjacentes, le contrôle comprenant en outre l'étape suivante :
remplir des données non valides dans une bande passante de transmission entre les couches fonctionnelles adjacentes pour réduire un débit d'interaction de données valides entre les couches fonctionnelles adjacentes.

8. Terminal, comprenant un dispositif de contrôle de trafic, **caractérisé en ce que** le dispositif de contrôle de trafic comprend :
une unité de surveillance (401, 501), configurée pour surveiller la température de fonctionnement du terminal ;
une unité de détermination (402, 502), configurée pour déterminer si la température de fonctionnement surveillée par l'unité de surveillance atteint une température de contrôle ; et
une unité de contrôle (403, 503), configurée pour contrôler un débit d'interaction de données entre des couches fonctionnelles adjacentes lorsque l'unité de détermination détermine que la température de fonctionnement atteint la température de contrôle, où les couches fonctionnelles adjacentes sont deux couches fonctionnelles adjacentes aléatoires du modèle de protocole de contrôle de transmission/protocole Internet à 7 couches, où le débit d'interaction de données entre les couches fonctionnelles adjacentes est contrôlé, de manière à réduire le débit d'interaction de données entre les couches fonctionnelles adjacentes, le contrôle comprenant en outre l'étape suivante :
convertir un protocole de communication pour une interaction de données entre les couches fonctionnelles adjacentes d'une version haut débit à une version bas débit.

9. Terminal, comprenant un dispositif de contrôle de trafic, **caractérisé en ce que** le dispositif de contrôle de trafic comprend :
une unité de surveillance (401, 501), configurée pour surveiller la température de fonctionnement du terminal ;
une unité de détermination (402, 502), configurée pour déterminer si la température de fonctionnement surveillée par l'unité de surveillance atteint une température de contrôle ; et
une unité de contrôle (403, 503), configurée pour contrôler un débit d'interaction de données entre des couches fonctionnelles adjacentes, de manière à réduire le débit d'interaction de données entre les couches fonctionnelles adjacentes, lorsque l'unité de détermination détermine que la température de fonctionnement atteint la température de contrôle, où les couches fonctionnelles adjacentes sont deux couches fonctionnelles adjacentes aléatoires du modèle de protocole de contrôle de transmission/protocole Internet à 7 couches, où l'unité de contrôle (403, 503) comprend au moins une unité parmi une unité d'ajustement de tampon (5031) et une unité d'ajustement de période (5032),
l'unité d'ajustement de tampon (5031) est configurée pour ajuster la taille d'un tampon entre les couches fonctionnelles adjacentes lorsque l'unité de détermination (502) détermine que la température de fonctionnement atteint la température de contrôle,
l'unité d'ajustement de période (5032) est configurée pour ajuster une période de planification de données de planification dans le tampon entre les couches fonctionnelles adjacentes lorsque l'unité de détermination (503) détermine que la température de fonctionnement atteint la température de contrôle.

10. Terminal selon l'une quelconque des revendications 7 à 9, **caractérisé en ce que**
l'unité de détermination (402, 502) est en outre configurée pour déterminer si la température de fonctionnement surveillée par l'unité de surveillance est inférieure à une température de restauration, et
l'unité de contrôle (403, 503) est en outre configurée pour arrêter de contrôler le débit d'interaction des données entre les couches fonctionnelles adjacentes, lorsque l'unité de détermination détermine que la température de fonctionnement est inférieure à la température de restauration.

11. Terminal selon l'une quelconque des revendications 7 à 10, **caractérisé en ce que** le terminal est une carte de données sans fil, un ordinateur ou un ordinateur disposant d'une carte de données sans fil.

12. Terminal selon l'une quelconque des revendications 7 à 10, **caractérisé en ce que** les couches fonctionnelles adjacentes sont une couche réseau et une couche de liaison de données.

13. Produit programme informatique, **caractérisé en ce qu'**il comprend un code de programme informatique qui, lorsqu'il est exécuté par une unité d'ordinateur, amène l'unité d'ordinateur à exécuter toutes les étapes de l'une quelconque des revendications 1 à 6.
